Europäisches Patentamt

European Patent Office

Office européen des brevets

(11) Publication number: **0 447 690 A1**

# EUROPEAN PATENT APPLICATION

(21) Application number: **90200669.1**

(22) Date of filing: **21.03.90**

(51) Int. Cl.⁵: **G03B 17/30**

(43) Date of publication of application:
**25.09.91 Bulletin 91/39**

(84) Designated Contracting States:
**AT BE CH DE DK ES FR GB GR IT LI LU NL SE**

(71) Applicant: **AGFA-GEVAERT naamloze vennootschap**
**Septestraat 27**
**B-2510 Mortsel(BE)**

(72) Inventor: **Buelens, Edward**
**Duffelsesteenweg 178**
**B-2550 Kontich(BE)**
Inventor: **Van Engeland, Jozef Leonard**
**Statiestraat 168**
**B-2580 St. Katelijne-Waver(BE)**

(54) **A light-tight cassette.**

(57) A cassette (10) for light-lightly holding and dispensing a roll of web material, which has a peripheral dispenser slot (15) in its shell (11) through which film can be drawn from a roll in the cassette, wherein the dispenser slot is lined with light-sealing strips (50,51) that are free from adhesive on at least their longitudinal margin which is located inside of the cassette.

Fig.6a

Field of the invention.

The present invention relates to a light-tight cassette or magazine (hereinafter called "cassette") for holding and dispensing a roll of light-sensitive photographic material.

The invention is particularly suitable for use with phototype-setting apparatus.

Description of the prior art.

Cassettes in the form of a generally rectangular box having a peripheral light-tight slot via which light-sensitive material can be drawn from a roll located in the box are known. The light-tightness of the dispensing slot is important for preventing light from entering the cassette and fogging outer convolutions of the roll of light-sensitive material during the removal of the cassette from its wrapper and during day-light loading or unloading of the cassette into or from a photographic exposure apparatus.

Most present-day cassettes are made from plastics or cardboard. The peripheral wall or shell of the cassette has in-turned plastic or cardboard lips forming the dispensing slot, and light-tight sealing of this slot is commonly effected by elastically deformable linings, more in particular strips of velvet. These strips are adhered to the lips by means of glue, in particular a pressure-sensitive, also called self-adhesive glue, provided at the backside of the light-sealing strips.

The described glue causes sometimes difficulties, in particular at the first pulling out of a length of a fresh roll of photographic film or paper. As a matter of fact, it may happen that the film comes into contact with the longitudinal edge of a light-sealing strip at the inside of the cassette and thereby touches and adheres to the corresponding edge of adhesive that is exposed at such place. The exposed edge of adhesive may have been caused by an excessive pressure during the application of the light-sealing strip to the lip, by a layer of adhesive that is too thick, by creeping behaviour of the adhesive, etc.

Pulling-out a film which touches the adhesive becomes difficult, and increased pulling by the operator, in order to obtain a length of film sufficient for the proper insertion of the film in the nip of the transport rollers of an exposure apparatus, aggravates the situation still more and finally may cause the film to pull back a marginal portion of the light sealing strip from the lip whereby this strip portion enters the dispensing slot and blocks any further movement of the film.

It is believed there are two important causes for the described defect.

First, the film as it is drawn from the roll and enters the dispensing slot of the cassette, follows different directions depending on how far the roll has been used. The limits of the range of different directions are formed by the film paths that are tangent to a fresh, respectively to an empty roll. The dispenser slot can accept a wide range of paths since the lips of the slot usually have a divergent form, considered in the direction towards the roll, but it will be understood that for the extreme film directions as described, the angular clearance between a light sealing strip and the oncoming film is small, and thus minor deviations of the film from its straight path may suffice for bringing the film in contact with the edge of the light-sealing strip and next also with the edge of the adhesive layer thereof. A well-known cause that makes a film deviate from its straight path from the roll towards the dispensing slot is partial unwinding of the roll of film under the influence of vibrations that may occur during the transport of the cassette.

Second, there are known cassettes in which the premature unwinding of the film roll during the transport is prevented by a locking member that locks the rotation of the core prior to the first use of the cassette. In one form, such locking member is ruptured by the operator when pulling out a certain length of film from the cassette, which causes overtensioning of the member and next its rupturing. It has been shown that the first pull by the operator is often too strong so that an important slack is produced in the film end between the roll and the dispensing slot which may cause the film to touch the edge of one or both light-sealing strips, and thereby also an edge of the adhesive layer.

It is possible to increase the curvature of the inner ends of the lips of the dispensing slot in order to widen the entrance opening for the film, but this is not desirable in practice since it complicates the correct application and glueing of a light-sealing strip to the lips.

SUMMARY OF THE INVENTION.

Object of the invention.

It is the object of the invention to provide an improved cassette of the type referred to, in which there is no risk for a rolled web of paper or film to enter into contact with adhesive near or on the edges of the light-sealing strips in the dispenser slot.

It is also an object of the invention to improve the light-tightness formed by opposed light-sealing strips in the dispenser slot of a photographic cassette.

Statement of the invention.

According to the present invention, a cassette for light-tightly holding and dispensing a roll of web material, which comprises a casing having a shell and two end walls with means for rotatably supporting a roll of web material, the shell having a peripheral dispenser slot through which the web can be pulled from the roll, the slot being defined by two opposed lips to each of which a light-sealing strip is adhered by glueing of its backside, is characterized thereby that at least one light-sealing strip is free from adhesive on at least longitudinal margin which is located at the inside of the cassette.

The term "margin" should be interpreted broadly, and covers a longitudinal end zone of a strip having a width ranging between 5 and 40 % of the total width of the strip.

It has been shown that the described measure completely avoids the problem of undesired adherent contact of the film with the light-sealing strips or linings of the dispenser slot, and yet has no detrimental effect on the satisfactory adherence of the strips since in spite of the smaller adherent surface, the remaining adherent surface may be situated completely or almost so within the region where the lips run parallel with each other, and the strips exhibit compression forces as a consequence of their mutual contact in the exit gap.

According to a suitable embodiment of the invention, both light-sealing strips are free from adhesive on at least the longitudinal margin which is located at the inside of the cassette.

According to a further suitable embodiment of the invention, the light-sealing strip(s) is (are) strips of velvet.

According to another suitable embodiment of the invention, the width of a non-adherent margin of a strip is within 1 and 5 mm.

According to a further embodiment of the invention, the stiffness of a non-adherent margin of a light-sealing strip is increased whereby such margin is capable of exercising an increased resistance against bending by the contact with the dispensed web, whereby the light-tightness is further improved.

The measures which have been described so far were directed primarily to the inner located margins of the light-sealing strips of the dispenser slot, but it should be understood that they may be applied as well to the longitudinal strip margins that are situated at the outside end of the slot. More in particular, if also the outside margins of the light-sealing strips are free of adhesive and if their stiffness is increased, they may supplement the light-tight sealing of the dispenser slot.

A suitable way of increasing the stiffness of the non-adhering margins of the light-sealing strips, is to apply to the backside of said margins one or more coatings of a polymer or the like which firmly adheres to the strip and which after drying produces a resilient layer with a non-tacky surface. The elasticity of the coated layer is thus added to the elasticity of the strip itself, and by appropriate choice of the composition and/or thickness of such layer, the desired increase of stiffness of the free margin of the strip may be obtained.

It is possible to apply the described coating over the full width of the light-sealing strips, and then to overcoat this coating with a layer of a self-adhesive glue, the width of such layer being smaller so as to leave non-adhering, uncoated margins.

BRIEF DESCRIPTION OF THE DRAWINGS

The invention will be described hereinafter by way of example with reference to the accompanying drawings wherein :

Fig. 1 is a perspective view of one embodiment of a cassette according to the invention,

Fig. 2 is a vertical longitudinal section taken along the plane indicated by the line 2-2 of Fig. 1,

Fig. 3 is a cross-sectional view on line 3-3 of Fig. 2,

Fig. 4 is an enlarged view of the dispenser slot of the illustration of Fig. 3,

Fig. 5a is an enlarged view of the dispenser slot of one embodiment of a cassette according to the invention,

Fig. 5b is a view of a light-sealing strip of the dispenser slot of Fig. 5a,

Fig. 6a is an enlarged view of the dispenser slot of another embodiment of a cassette according to the invention, and

Fig. 6b is a view of a light-sealing strip of the dispenser slot of Fig. 6a.

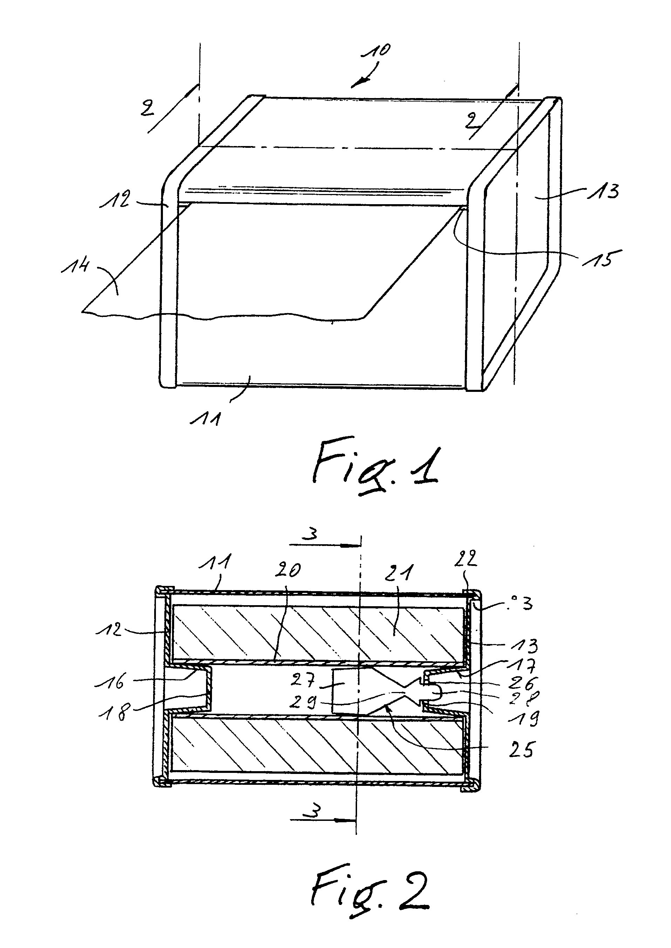

Referring to Fig. 1, a rectangular cassette 10 for holding a roll of light-sensitive photographic material comprises a shell portion 11 and two end caps 12 and 13. A film 14 of photographic material may be drawn from the cassette through a light-tight dispenser slot 15 that extends between the end caps over the full length of the shell and may be situated close to a corner portion of the shell. The photographic material has been illustrated as being transparent in the figure. The shell portion of the cassette may be manufactured from plastic or paperboard whereas the end caps may preferably be made from plastic by injection-moulding or by thermo-vacuum forming.

Fig. 2 illustrates a vertical longitudinal section of the cassette along line 2-2 of Fig. 1. The end caps have central hub portions 16, 17 formed by central portions upset from the wall of the caps terminating in circular end faces 18 and 19. The hub portions have a slight conical form and they rotatably support a hollow core 20 onto which a roll 21 of the light-sensitive film 14 is wound. The core is a tubular body that is suitably made from paperboard or plastic.

The end caps 12 and 13 may have inner and outer peripheral flanges as at 22 and 23, defining a peripheral groove for light-tightly receiving an end of the shell 11. The fixing of the end caps to the shell may be done by glueing, by taping or by stapling. The end caps may further be provided with radial ribs for increased rigidity, and with corner guide portions with sloping flanks for facilitating the assembly of the shell and end caps, all as known in the art.

The core 20 may be locked against undesired rotation in the cassette by means of a locking member in the form of an elongated member 25 that extends from the core 20 into the hub portion 17.

The locking member 25 is made of a flat generally rigid sheet material having a first end portion 27 that is frictionally engaged by the core 20 and a second tongue-shaped end portion 28 that engages in a slot 26 in the hub. These end portions are interconnected by a zone 29 of reduced width.

Further details about the construction of the described locking member may be found in US P. 4,403,845 entitled "Cassette for holding and dispensing a roll of web material".

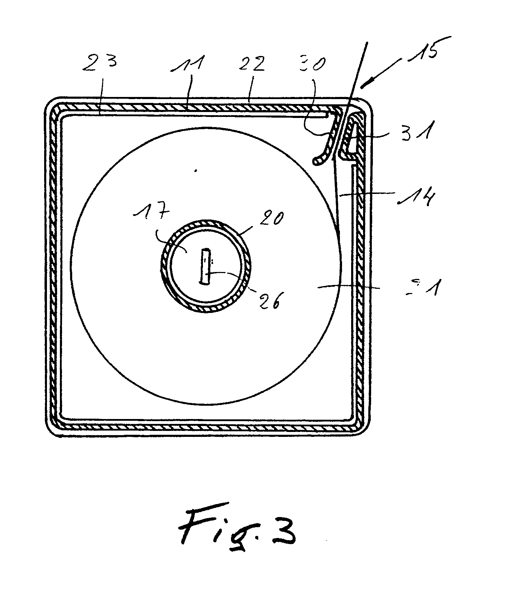

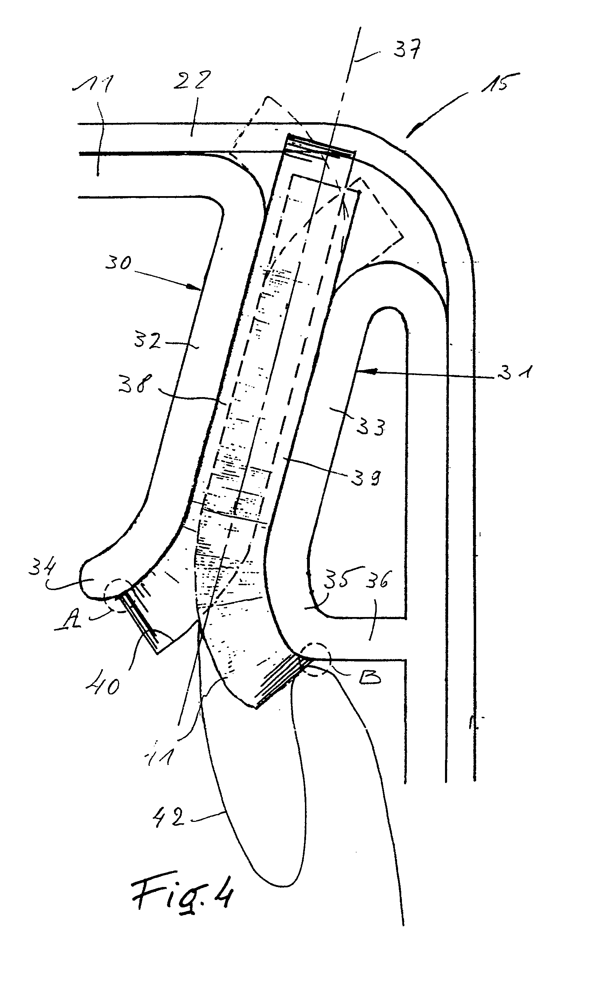

Fig. 3 is a cross-sectional view on line 3-3 of Fig. 2, the locking member 25 being omitted, and Fig. 4 is an enlarged view of the dispenser slot in the illustration of Fig. 3, for a prior art cassette.

Referring to Fig. 4, the two lips 30 and 31 of the shell 11 are formed by end portions of the shell which are angled inwardly of the shell. The lips have parallel sections 32 and 33, and diverging end sections 34 and 35. The end section 35 is connected through a wall section 36 with the side wall of the shell thereby to form a beam-like member that increases the rigidity Of the lip. The general direction of the pulling-out of a film in use of the cassette is indicated by the dash and dot line 37. The lips are provided with light-sealing strips 38 and 39, in the present example strips of velvet, that are stuck to the lip surfaces by means of a layer of a pressure-sensitive glue provided on the backside of the strips.

The term "velvet" refers in the present example to a clothlike material comprising pile warps of polyamide or the like, fitted to a ground warp. The piles may be fluffed, looped, or a mixture of both types.

The strips of velvet have been drawn somewhat staggered according to their width direction, i.e. in the direction of withdrawal of the film from the cassette. This has been done in the drawing mainly with the aim of easier recognition of the individual positions of the strips. In practice, the strips may coincide with each other, be slightly staggered, and they may even have different widths.

The drawing shows how the strips overlap each other over a large extent, according to their thickness. This feature occurs in practice since the piles of both opposed strips interengage and compress each other, and ensure in this way the light-tight sealing of the dispenser slot 15.

The longitudinal margins 40 and 41 of the strips 38 and 39 follow the curvature of the lip to which the strips are stuck, and this requires the application of extra pressure to make these margins adhere sufficiently to the lips. It should be noted that at these positions there is also no counter pressure from an opposed strip, as distinct from the parallel sections of the strips where the compression forces between the lips contribute to the good adherence of the strips to the lips.

The questionable regions of the dispenser slot are indicated by the broken circles A and B. Indeed, it is at these locii that pressure-sensitive compound may become exposed to the air and get touched by a loop in a slack of the film, as illustrated diagrammatically by the film loop 42.

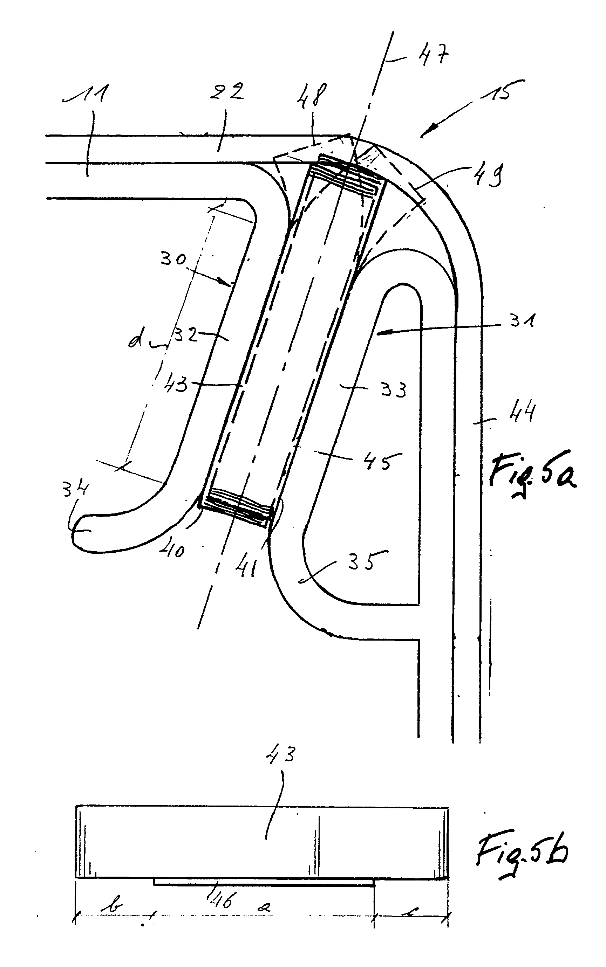

One embodiment of a cassette according to the invention for avoiding the described defect, is illustrated in Fig. 5a.

Two light-sealing strips 43 and 45 of velvet are stuck to a portion of the parallel sections 32 and 33 of the lips 30 and 31 of the cassette. The strips are not stuck over their overall width since both their marginal bands are free from pressure-sensitive adhesive.

Referring to Fig. 5b, the strip 43 is shown as bearing a pressure-sensitive backing layer 46 of a width a. The margins b and c of the strip are free of adhesive. The distance $a + c$ is about equal to the width d of the parallel section of the lip 32. The strip 45 is identic to strip 43.

The illustration of Fig. 5a shows that the strips do not extend beyond the parallel section of the dispenser slot at the interior end of the slot, and thereby their inside margins are firmly in contact with the lip surface, also in the absence of any adhesive.

The marginal strip portions at the exit end of the dispenser slot, on the contrary, extend freely and will take thereby a position that differs from the illustrated one which is a theoretic illustration only. It will be understood that a web of film or paper that is pulled through the slot, approximately along a path as illustrated by the dash-and-dot line 47, will considerably increase the pressure on the piles of the strips of velvet so that at those places where the strips are not supported, they will be urged away. This makes that the outside margins of the strips will take a position that has a divergent form, as illustrated in broken lines 48 and 49.

The function of the outside margins of the strips of velvet is twofold.

First, and as known in the art, the provision of a surface that shows a reduced frictional contact with the film as the film is pulled from the cassette according to a direction that deviates from that of the direction 47. This situation is not uncommon, since in many exposure apparatus, the withdrawal direction of the film runs nearly parallel with the side wall 44 of the cassette.

Second, and this is new in the art, to make the outside margins of the light-sensitive strips operate as flaps that are in resilient contact with the film and thereby lengthen or extend, so to say, the light-seal which is formed by the parallel lip portions. This light-seal is particularly important at the moment an operator pulls out a length of film from the cassette in order to prepare it for the daylight loading of an exposure apparatus.

The elasticity of commonly used strips of velvet is limited, and so may be the improvement which is offered by the free margins of the light-sealing strips just described.

Therefore, according to another embodiment of the invention, the stiffness of the freely extending margins of the light-sealing strips is enhanced by the application of a flexible, tough layer to their backsides.

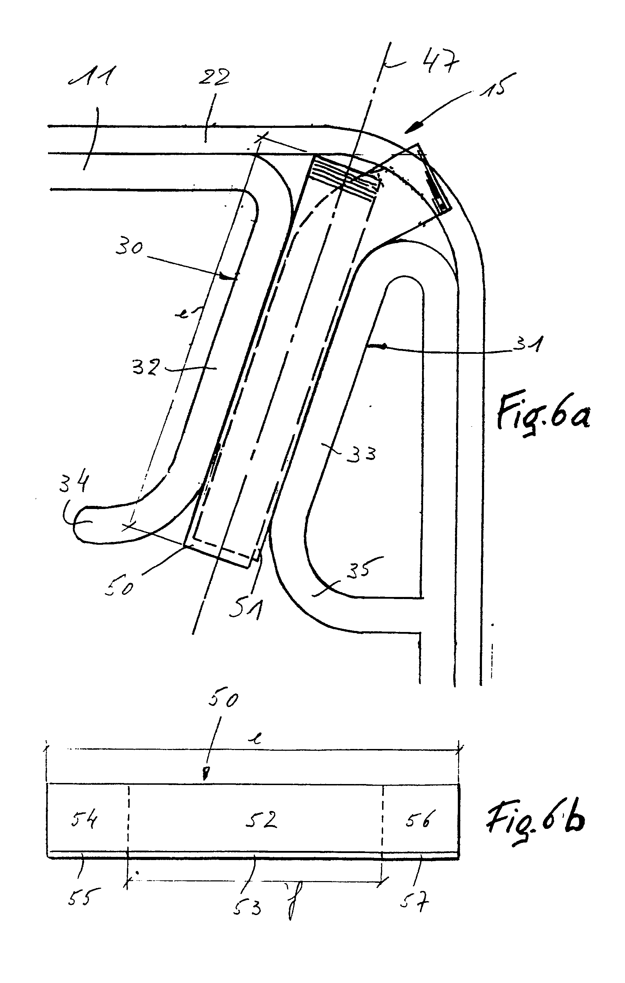

Referring to Fig. 6a, a cassette mouth is illustrated which is provided with two light-sealing strips 50 and 51, which are stuck to the parallel sections 32 and 33 of lips 30 and 31. The width e of the strips is such that they extend with both their margins beyond the straight sections of the lips of the shell. The strip 50 is illustrated separately in Fig. 5b. The central zone 52 of the strip has a width f which corresponds approximately with the width of the straight portion 32 of the lip 30, and bears on said zone a pressure-sensitive layer 53 on its backside. The marginal zone 54 of the strip which is located at the inside of the cassette is provided with a tough layer 55 of a non-adhesive compound which adds its stiffness to that of the strip so that the final stiffness of the strip margin increases. The opposite marginal zone 56 of the strip is provided with a layer 57 which is similar to the layer 55, whereby this margin gets an enhanced stiffness as well.

The effects of the described sealing strips are as follows. The absence of any pressure-sensitive adhesive at or near the edges of the light-sealing strips excludes the risk for the film that is pulled from the cassette to get occasionally into contact with such adhesive.

Further, an increased resistance against flexure of the strip margins that freely extend at either side of the dispenser slot, contributes to the light-tight sealing of the dispenser slot since the free margins increase in fact the width of the dispenser slot. The leading end of the roll of film that protrudes from the dispenser slot of the cassette is usually fixed to a wall of the shell by means of a label or the like, and the cassette is then wrapped in a moisture- and air-tight bag or envelope that protects the photographic material.

At the first use of a cassette, the operator removes the protective wrapper from the cassette and then breaks the sealing label and pulls the leading end of the film until a clearly audible click signals the rupturing of the locking member at zone 29, so that the roll is now free to rotate and thus the cassette is ready for loading in the exposure apparatus.

The first pull by the operator on the leading film end in order to unlock the roll of the cassette often is considerably stronger than required, and this causes an acceleration of the roll of wound film which is so large that the roll continuous to rotate for some revolutions after the withdrawal of the film has stopped. This causes an important slack in the outer film windings and in the film path from the roll towards the dispenser slot, which may conduct to the situation as illustrated tentatively in Fig. 4. It has been shown that a cassette with a dispenser slot arranged in accordance with the present invention never produces any problem due to contact of the film with traces of adhesive on the light-sealing strips.

One example of a cassette according to the present invention was provided with light-sealing strips of velvet, with a pile height of 2.45 mm, a width of 17 mm, and a pressure-sensitive backing layer in accordance with the Fig. 5b embodiment which left margins of 3 mm free from adhesive.

The present invention is not limited to the described embodiments.

A sealing strip with the characteristics as illustrated in Fig. 6b may also be obtained by providing a layer of a stiffness-enhancing compound uniformly over the complete width of the strip, and by applying thereon a layer of a pressure-sensitive adhesive which leaves free at least one margin of the strip.

The locking of the core prior to the first use of the cassette must not necessarily occur according to the disclosed example, but may also be performed by means of a locking pin or the like which must be removed at the moment of first use. We refer to EU AI 0 263 538 entitled "Light-tight cassette and method for packing rolls of light-sensitive material in a cassette", wherein an example of such different locking system is disclosed.

The shell of the cassette may have other configurations than the illustrated square form, and thus shells with a D-like, a polygonal cross-section or the like, fall within the scope of protection of the present invention as well.

The opposed lip sections of the dispenser slot of the cassette must not necessarily be straight, but may also be curved in the direction of withdrawal of the film, thereby to enhance the light-tightness of the exit slot.

The rigidity of the lips of the dispenser slot may be increased by the provision of a suitable elongate stiffening member that increases the resistance of a lip to bending forces which may tend to widen the slot. This improvement forms the subject of EU AI 0 298 536.

## Claims

1. A cassette for light-tightly holding and dispensing a roll of web material, which comprises a casing having a shell and two end walls with means for rotatably supporting the roll of web material, the shell having a peripheral dispenser slot through which the web can be drawn from the roll, the slot being defined by two opposed lips to each of which a light-sealing strip is adhered by glueing of its backside for providing a light-tight closure of the slot, wherein at least one light-sealing strip is free from adhesive on at least its longitudinal margin which is located inside of the cassette.

2. A cassette according to claim 1, wherein also the longitudinal margin of a light-sealing strip that is located at the outlet side of the dispenser slot is free from adhesive.

3. A cassette according to claim 1 or 2, wherein the innerside located longitudinal margin of at least one light-sealing strip has a stiffness that is larger than the stiffness of the central zone of the light-sealing strip.

4. A cassette according to claim 3, wherein said increased stiffness is obtained by the coating of a layer on the backside of such margin of the strip.

5. A cassette according to claims 3 or 4, wherein also the outerside located longitudinal margin of a strip is provided with a layer which increases the stiffness of such margin.

6. A cassette according to any of claims 1 to 4, wherein said at least one light-sealing strip is glued by means of a pressure-sensitive layer coated on its backside.

7. A casstte according to any of claims 1 to 6, wherein the width of a non-adhering margin of a strip is between 1 and 5 mm.

8. A cassette according to any of claims 3 to 6, wherein the width of a margin of a strip with increased stiffness, is between 1 and 5 mm.

Fig. 1

Fig. 2

Fig. 3

Fig.4

Fig.5a

Fig.5b

Fig.6a

Fig.6b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4634071 (H.E.HERTEL)<br>* abstract; figures 1-6 * | 1-5 | G03B17/30 |
| Y | * column 1, lines 35 - 60 * | 6 | |
| A | * column 3, line 35 - column 4, line 68 * | 7, 8 | |
| | --- | | |
| Y | EP-A-125674 (E.I.DU PONT DE NEMOURS AND COMPANY)<br>* abstract * | 6 | |
| A | * page 9, lines 15 - 28; figures 1, 3 * | 1-5 | |
| | --- | | |
| A | US-A-3537376 (P.J.FLEMING, ET.AL.)<br>* abstract; figures 1-8 *<br>* column 2, lines 15 - 36 * | 1-8 | |
| | --- | | |
| D,A | EP-A-298536 (AGFA)<br>* page 4, lines 50 - 54; claims 1-4; figures 1, 2 * | 1-8 | |
| | --- | | |
| D,A | US-A-4403845 (E.BUELENS, ET.AL.)<br>* abstract; figures 1-6 * | 1-8 | |
| | ----- | | |

| TECHNICAL FIELDS SEARCHED (Int. Cl.5 ) |
|---|
| G03B<br>G03C |

The present search report has been drawn up for all claims

| Place of search | Date of completion of the search | Examiner |
|---|---|---|
| BERLIN | 21 MAY 1990 | MANNTZ, W |